# EUROPÄISCHE PATENTSCHRIFT

(11) **EP 1 536 661 B1**
(45) Veröffentlichungstag und Bekanntmachung des Hinweises auf die Patenterteilung: **12.04.2017**
(21) Anmeldenummer: 04104281.3
(22) Anmeldetag: 06.09.2004
(51) Int. Cl.: H04W 60/00, H04L 29/12, H04L 29/06, H04W 8/26

(54) **Verfahren zum Registrieren eines Kommunikationsgeräts, zugehöriges Kommunikationsgerät sowie Registrierungseinheit**
Method for registering a communication device, corresponding communication device and registration entity
Procédé d'enregistrement d'un dispositif de communication, dispositif de communication correspondant et une entité d'enregistrement

(30) Priorität: 26.11.2003 DE 10355265
(43) Veröffentlichungstag der Anmeldung: 01.06.2005
(73) Patentinhaber: Siemens Aktiengesellschaft, 80333 München (DE)
(72) Erfinder: Beckmann, Mark, 38124 Braunschweig (DE); Bienas, Maik, 38124 Braunschweig (DE); Schmidt, Holger, 38102 Braunschweig (DE)

(56) Entgegenhaltungen:
- WO-A-03/081431
- WO-A-03/094475
- GARCIA-MARTIN ERICSSON M: "3rd-Generation Partnership Project (3GPP) Release 5 requirements on the Session Initiation Protocol (SIP); draft-ietf-sipping-3gpp-r5-req uirements-00.txt" IETF STANDARD-WORKING-DRAFT, INTERNET ENGINEERING TASK FORCE, IETF, CH, Bd. sipping, 11. Oktober 2002 (2002-10-11), XP015039002 ISSN: 0000-0004
- NOKIA: "Insertion of temporary IMPI in all SIP messages" 3GPP DRAFT; N1-020746_TIMPI_CR_24229, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. CN WG1, Nr. Fort Lauderdale, Florida, USA; 20020403, 3. April 2002 (2002-04-03), XP050066368 [gefunden am 2002-04-03]

## Beschreibung

In der Praxis ist es wünschenswert, einen etwaig unberechtigten Zugriff auf die permanent bzw. dauerhaft zugeordnete Kommunikationsadresse eines Kommunikationsgeräts durch ein anderes Kommunikationsgerät wirkungsvoll zu vermeiden.

Die Druckschrift WO 03/81431 offenbart ein Verfahren, bei dem ein Netzwerkelement der privaten Identität eines Subscribers einen Zufallsstring, der als temporäre IMPI bezeichnet wird, zuordnet.

Die Druckschrift WO 03/094475 offenbart eine anonyme Kommunikation mittels einer anonymen temporären Subscriber Identität, die vom Kommunikationsnetz bereit gestellt wird.

Das Standardisisierungsdokument "3rd-Generation Partnership Project (3GPP) Release 5 requirements on the Session Initiation Protocol (SIP)" (draft-ietf-sipping-3gpp-r5-requirements-00.txt) von M. Garcia-Martin, Ericsson vom October 11, 2002 beschreibt Erfordernisse, welche durch 3 GPP identifiziert wurden, um SIP für Release 5 von 3GPP IMS in zellularen Netzwerken zu unterstützen.

Die oben genannte Aufgabe wird durch folgendes erfindungsgemäße Verfahren gelöst:
Verfahren zum Registrieren eines Kommunikationsgeräts an einem Kommunikationsnetzwerk, indem zwischen dem Kommunikationsgerät und mindestens einer Registrierungseinheit des Kommunikationsnetzwerks ein oder mehrere temporäre Kommunikationsadressen ausgehandelt werden, die lediglich für eine vorgebbare Nutzungszeitdauer gültig sind, und die jeweilige temporäre Kommunikationsadresse von der Registrierungseinheit für diese Nutzungszeitdauer registriert wird. Dabei werden von dem Kommunikationsgerät ein oder mehrere temporäre Kommunikationsadressen zur Registrierung durch die Registrierungseinheit vorgeschlagen, und diese vorgeschlagenen Kommunikationsadressen vom Kommunikationsgerät mittels eines Registrierungssignals an die Registrierungseinheit übermittelt. Dabei wird die jeweilig übermittelte, temporäre Kommunikationsadresse lediglich dann von der Registrierungseinheit registriert, wenn diese temporäre Kommunikationsadresse für deren Nutzungszeitdauer noch frei vergebbar ist.

Durch die Verwendung einer temporären Kommunikationsadresse anstelle der permanent bzw. fest zugewiesenen Kommunikationsadresse bleibt das Kommunikationsgerät nur unter dieser zeitweise vergebenen, d.h. dynamischen Kommunikationsadresse für andere Kommunikationsadresse ansprechbar bzw. adressierbar. Nach Ablauf eines vorgegebenen Nutzungszeitraums wird die jeweilige temporäre Kommunikationsadresse des Kommunikationsgeräts ungültig. Lediglich während der Gültigkeitszeitdauer der jeweiligen temporären Kommunikationsadresse lässt sich das Kommunikationsgerät von anderen Kommunikationsgeräten gültig adressieren und erreichen. Auf diese Weise lässt sich das Kommunikationsgerät vor unerwünschten Zugriffen auf seine wahre Kommunikationsadresse durch andere Kommunikationsgeräte schützen. Durch die temporäre Zuweisung einer Alternativ- bzw. Ersatzadresse anstelle der tatsächlichen, fix zugeordneten Kommunikationsadresse bleibt das Kommunikationsgerät nur für einen vorgebbaren Zeitraum adressierbar, so dass es insbesondere gegenüber manipulativen Zugriffen Dritter gesichert ist. Zum Beispiel kann dadurch die andauernde Zusendung von "Spams" wirkungsvoll unterbunden werden, da nach Ablauf der Gültigkeitsdauer der temporär vergebenen, alternativen Kommunikationsadresse ein Kommunikationswegeaufbau unmöglich wird. Denn die tatsächliche Kommunikationsadresse des Kommunikationsgeräts bleibt für andere Kommunikationsteilnehmer versteckt bzw. unsichtbar.

Die Erfindung betrifft auch ein Kommunikationsgerät sowie eine Registrierungseinheit mit Mitteln zum Durchführen des erfindungsgemäßen Verfahrens.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:
- Figur 1: in schematischer Darstellung die Grundstruktur eines Funkkommunikationssystems nach 3GPP (Third Generation Partnership Project)-Spezifikationen mit der Einbindung eines IP (Internet Protocol) - Multimedia Funkkernnetzwerk (Core Network) Subsystems zur Durchführung des erfindungsgemäßen Verfahrens,
- Figur 2: in schematischer Darstellung die zeitliche Reihenfolge von Registrierungsprozeduren eines Funkkommunikationsgeräts, das sich an das GPRS (General Packet Radio System)-Funkkommunikationsnetzwerk sowie dessen zugeordnetes IP - Multimedia Kernnetzwerk Subsystem von Figur 1 wie bisher unter seiner permanent zugewiesenen Kommunikationsadresse anmeldet,
- Figur 3: im Detail den zeitlichen Ablauf von Signalisierungsnachrichten zwischen dem anzumeldenden Funkkommunikationsgerät bei Komponenten des GPRS-Funkkommunikationssystems sowie dessen zugeordneten IP- Multimedia Kernnetzwerk Subsystems von Figur 1 bzw. 2 zur initialen Registrierung der fest zugewiesenen Kommunikationsadresse,
- Figur 4: den Inhalt einer Registrieranforderungsnachricht des Funkkommunikationsgeräts im Signalfluss von Figur 3 zur initialen Registrierung seiner fest zugewiesenen Kommunikationsadresse,
- Figur 5: den Inhalt einer Registrieranforderung des Funkkommunikationsgeräts des Signalflussdiagramms von Figur 3, das nach einer ersten Variante des erfindungsgemäßen Verfahrens temporäre Kommunikationsadressen enthält,
- Figuren 6, 7: jeweils ein Bestätigungssignal, das von einer Registrierungs- bzw. Adressverwaltungseinheit im Funkkommunikationsnetzwerk des Funkkommunikationssystems von Figur 1 auf die Registrieraufforderung des Funkkommunikationsgeräts von Figur 3 zurück an dieses gesandt wird, und
- Figuren 8, 9: zwei Varianten des erfindungsgemäßen Verfahrens zur Vergabe einer temporären Kommunikationsadresse für das Funkkommunikationsgerät von Figur 1 mit 3, unter der es für andere Funkkommunikationsgeräte adressierbar ist.

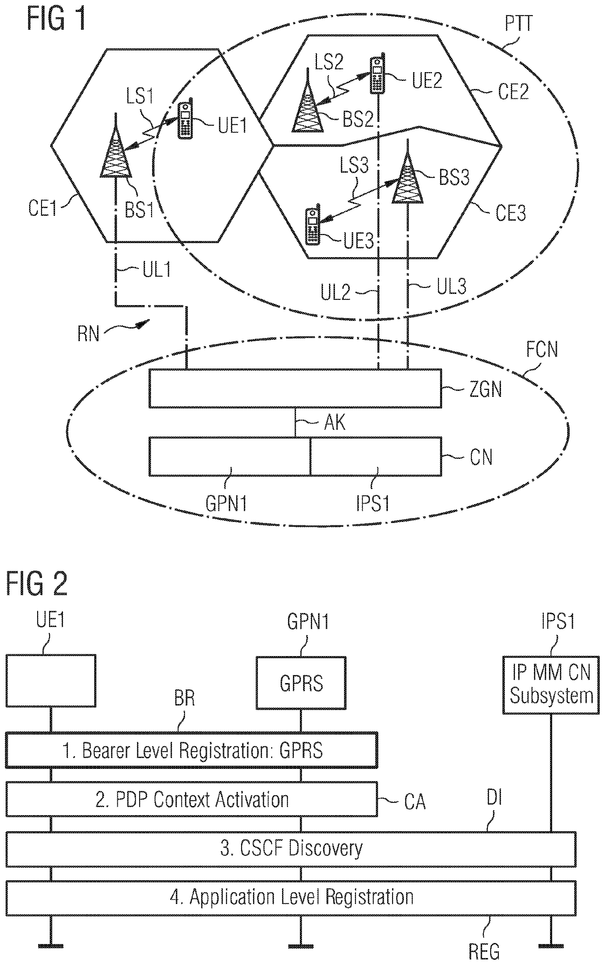

Elemente mit gleicher Funktion und Wirkungsweise sind in den Figuren 1 mit 9 jeweils mit denselben Bezugszeichen versehen. Figur 1 zeigt beispielhaft die Grundstruktur eines UMTS (Universal Mobile Telecommunication System)-Funkkommunikationssystems RN. Es weist eine Vielzahl von Funkzellen auf, die funktechnisch von Basisstationen aufgespannt werden. Hier im Ausführungsbeispiel von Figur 1 sind der zeichnerischen Übersichtlichkeit halber lediglich drei Basisstationen BS1 mit BS3 mit ihren zugehörigen Funkzellen CE1 mit CE3 eingezeichnet. Diese Basisstationen sind über strichpunktiert eingezeichnete Übertragungsleitungen UL1 bis UL3 mit den Komponenten eines Funknetzwerkes FCN verbunden. Dieses weist ein Funkzugangsnetzwerks ZGN auf, an das über entsprechende Kommunikationsverbindungen AK zusätzlich ein sogenanntes Kernnetzwerk CN angeschlossen, welches ein GPRS Kernnetzwerk GPN1 und ein sogenanntes "IP (Internet Protocol)-Multimedia Core Network (Kernnetzwerk) Subsystem" IPS1 enthält. Das IP- Multimedia Core Network Subsystem wird im UMTS- Standard als IMS abgekürzt. Einzelheiten zum "IP-Multimedia Core Network Subsystem" sind insbesondere in der einschlägigen Spezifikation 3GPP TS23.228: "IP Multimedia Subsystem (IMS); Stage 2" angegeben. Für dieses um das "IP Multimedia Core Network Subsystem" erweiterte Kernnetzwerk ist es insbesondere wünschenswert, einen Multimedia Konferenzservice zu implementieren. Dieser Multimedia Konferenzservice basiert hierzu zweckmäßigerweise auf einer Architektur und auf Protokollkomponenten, die entsprechend dem Rahmenwerk ("Conferencing Framework") der IETF ("Internet Engineering Task Force") ausgeführt sind (siehe insbesondere IETF Sipping Working Group: Draft-IETF-Sipping-Conferencing-Framework-00). An diesen Multimedia Konferenzservice wird gefordert, dass er Mittel zur Erzeugung, zum Management, zur Beendigung, zum Eintritt und zum Verlassen von Multimediakonferenzen bereitstellt. Weiterhin wird verlangt, dass er Methoden zur Benachrichtigung der an einer bestimmten Multimediakonferenz teilnehmenden Konferenzkommunikationsgeräte bzw. deren Nutzern über spezifische, diese Konferenz betreffende Informationen und Regeln beinhaltet. Innerhalb des jeweiligen Multimediakonferenzservice können dabei grundsätzlich beliebige Medienarten und/oder Medienformate zwischen den Teilnehmergeräten ausgetauscht werden. Dies umfasst beispielsweise Audio-, Video-, Sprach-, Text-, Daten-, Instant Messaging-, Gaming (Spiele)-Konferenzen, usw. sowie Kombinationen hiervon. Die hier im Ausführungsbeispiel eines UMTS-Funkkommunikationssystems angewandten Prinzipien lassen sich selbstverständlich auch allgemein auf andere Kommunikationssysteme und deren Kommunikationsgeräte übertragen.

Im "IP-Multimedia Core Network Subsystem IPS1" (abgekürzt IMS) identifiziert jeweils eine fest abgelegte Nutzerkennung, insbesondere eine öffentliche Nutzeridentität, d.h. eine sogenannte "Public User Identity" (abgekürzt PUID) in eindeutiger Weise einen bestimmten Nutzer. Dabei können für ein und denselben Nutzer durchaus mehrere derartige PUIDs im IMS registriert sein. Die Nutzerkennung PUID, die durch eine sogenannte "TEL-URL" (Telefon Uniform Resource Locator) oder eine sogenannte "SIP-URI" (Session Initiation Protocol Uniform Resource Identifier) gebildet bzw. dargestellt wird, ist hinsichtlich ihres Format mit dem Format einer bekannten E-Mail-Adresse vergleichbar. Ein oder mehrere PUIDs werden dem jeweiligen Nutzer im "IP-Multimedia Core Network Subsystem" wie z.B. IPS1 statisch, d.h. permanent, durch den jeweiligen Mobilfunknetzbetreiber (Operator) zugewiesen und dort fest abgespeichert. Der jeweilige Nutzer kann nur Kommunikationsverbindungen herstellen, wenn die hierfür verwendete PUID registriert wurde. Dies erfolgt entweder implizit oder explizit in einer Registrierungs- bzw. Aktivierungsprozedur. Bei einer impliziten Registrierung werden außer der in einer Registrierungsanforderung enthaltenden PUID weitere im Kernnetzwerk hinterlegte PUIDs registriert. Weiterhin können einem Nutzer nur eingehende Kommunikationsverbindungen zugestellt werden, sofern die entsprechende PUID zuvor registriert wurde. Mit anderen Worten ausgedrückt heißt das, dass der jeweilige Nutzer erst nach Aktivierung seiner im IMS bereits statisch hinterlegten Kennung zum Kommunikationsverkehr unter seiner PUID zugelassen und für andere Kommunikationsgeräte adressierbar wird.

Im vorliegenden Ausführungsbeispiel von Figur 1 halten sich in den Funkzellen CE1 bis CE3 beispielsweise drei Funkkommunikationsgeräte, insbesondere Mobilfunkgeräte, UE1 bis UE3 auf. Jedes Funkkommunikationsgerät UE1 bis UE3 hat hierbei jeweils zur Basisstation seiner momentanen Aufenthaltsfunkzelle eine Funkverbindung bzw. Luftschnittstellen-Verbindung LS1 bis LS3. Die drei Funkkommunikationsgeräte UE1 bis UE3 sind hier im Ausführungsbeispiel zu einem sogenannten PTT ("Push To Talk")-Service als Multimediakonferenzservice angemeldet. Bei einem solchen PTT-Konferenzservice kann jeweils nur der Bediener eines der beteiligten Kommunikationsgeräte eine Sprachnachricht absetzen, währenddessen die übrigen beteiligten Funkkommunikationsgeräte diese Sprachnachricht lediglich empfangen können. Innerhalb des PTT-Konferenzservices ist somit zwischen den beteiligten Funkkommunikationsgeräten lediglich ein Sprach- und/oder Datenaustausch nach dem sogenannten Halbduplex -Übertragungsverfahren bereitgestellt. Dies entspricht weitgehend dem bekannten Walkie-Talkie-Betrieb aus dem CB- Funk.

Wie bereits beschrieben wurde, wird das jeweilige Funkkommunikationsgerät UE1 bis UE3 im IP-Multimedia Core Network Subsystem IPS1 über eine ihm fest zugeordnete PUID adressiert. Für die jeweilig fest hinterlegte PUID des jeweiligen Funkkommunikationsgeräts wird das sogenannte "SIP-URI" oder das "TEL-URL"-Format verwendet. Nähere Einzelheiten zu diesen Formaten sind in den Spezifikationen IETF RFC3261: "Session Initiation Protocol (SIP)", IETF RFC2396: "Uniform Resource Identifiers (URI)" sowie IETF RFC2806: "URLs for Telephone Calls" angegeben. Eine "SIP URI"-Kommunikationsadresse bzw. Kennung verwendet ein Format, das dem der bekannten E-Mail-Adresse ("mailto URL") ähnlich ist. Zum Beispiel bezeichnet

| | |
|---|---|
| | sip:Holger.Schmidt@siemens.com |
| oder | tel:+4953419061818 |
| oder allgemeiner: | sip:UserPart@HostPart |

eine gültige "SIP URI" bzw. "TEL URL" Kommunikationsadresse.

Jedem Funkkommunikationsgerät können im "IP Multimedia Core Network Subsystem" mehrere derartige PUIDs zugeordnet sein. Die PUIDs werden zur Adressierung des jeweiligen Funkkommunikationsgeräts verwendet, so dass mit deren Hilfe ein SIP-Anforderungssignal bzw. "SIP-Request" eines sogenannten "User Agent Clients" (UAC) zum sogenannten "User Agent Server" (UAS) geroutet bzw. vermittelt werden kann.

SIP (Session Initiation Protocol) ist innerhalb von 3GPP als Signalisierungsprotokoll für das "IP-Multimedia Core Network Subsystem" (IMS) ausgewählt worden. Das "Session Initiation Protocol" (SIP) ist ein sogenanntes "Application-Layer Control Protocol", d.h. ein Signalisierungsprotokoll zum Aufbau, zur Modifikation und zum Abbau von Multimedia Sessions bzw. Sitzungen. Diese Multimedia Sessions können z.B. Internet-Telefonverbindungen (Voice Over IP) und ähnliche Applikationen enthalten. Mittels SIP können Teilnehmer zu bereits existierenden Sessions bzw. Sitzungen eingeladen, hinzugefügt und die Zusammensetzung der Multimedia Session verändert werden. SIP verfügt unter anderem über Fähigkeiten der Adresszuordnung bzw. Adressabbildung, der Lokalisierung des jeweilig angerufenen Teilnehmergeräts und der Umleitung von Verbindungen. Elemente einer auf SIP beruhenden Architektur werden dabei als User Agent (UA), Proxy Server, Redirect Server und Location Server bezeichnet. Ein "SIP-User Agent" (Nutzeragent) ist ein Endsystem, das dem jeweiligen Nutzer eines Funkkommunikationsgeräts die Teilnahme an einer SIP-Session bzw. Sitzung erlaubt. Ein "SIP User Agent" kann weiterhin in einem "SIP User Agent Client" (UAC) und "User Agent Server" (UAS) aufgeteilt sein. Ein "User Agent Client" generiert und sendet Anfragen (SIP-Request), während ein "User Agent Server" auf Anfragen antwortet (SIP Response). In einem UMTSkonformen, SIP-fähigen Endgerät (User Entity: abgekürzt UE), insbesondere Mobilfunkgerät, ist ein "User Agent" enthalten, d.h. sowohl ein "User Agent Client" (UAC) als auch ein "User Agent Server" (UAS).

Figur 2 zeigt den zeitlichen Ablauf der zu durchlaufenden Prozeduren während der initialen Registrierung bzw. Anmeldung eines Funkkommunikationsgeräts wie z.B. UE1 von Figur 1. Einzelheiten hierzu sind insbesondere in der Spezifikation 3GPP TS 23.221: "Architectural Requirement", Absatz 8.1 angegeben. Die Aktivierung bzw. Registrierung der jeweilig hinterlegten PUID des Funkkommunikationsgeräts UE1 erfolgt dabei in der mit "4. Application Level Registration" bezeichneten Prozedur REG. Zu Beginn wird eine Registrierung des jeweiligen Funkkommunikationsgeräts wie z.B. UE1 beim GPRS-Kernnetzwerk GPN1 auf Bearer (Träger)- bzw. GPRS-Level (Ebene) mit Hilfe einer ersten Prozedur BR mit dem Namen "1. Bearer Level Registration: GPRS" durchgeführt. Im Rahmen der Erfindung wird dabei unter Registrierung bzw. Anmeldung im allgemeinen die sogenannte "Application Level" Registrierung verstanden, wenn nichts anderes explizit angegeben ist. Die "GPRS-Level" Registrierung (GPRS Attach) wird während der Inbetriebnahme des jeweiligen Funkkommunikationsgeräts wie z.B. UE1 durchgeführt. Zum Zugriff auf das IMS wie z.B. IPS1 und zum Austausch von IP-Daten auf der OSI (Open Systems Interconnection)-Netzwerkebene wird dem jeweiligen Funkkommunikationsgerät eine IP-Adresse dynamisch zugeordnet. Zum Bezug einer IP-Adresse, die im UMTS System mit der sogenannten PDP (Packet Data Protocol)-Adresse identisch ist, wird die mit "2. PTP Context Activation" bezeichnete zweite Prozedur CA von Figur 2 aktiviert. Innerhalb dieser Prozedur wird ein sogenannter "Primary PDP Context" aktiviert, sofern noch keiner existiert. Andernfalls kann auch ein sogenannter "Secondary PDP Context" aktiviert werden. Ein oder mehrere Secondary PDP Contexts sind dabei logisch einem "Primary PDP Context" zugeordnet. Gemeinsam ist ihnen die Verwendung derselben IP-Adresse und desselben APN ("Access Point Name"), der ein Element des PDP-Kontexts ist. Einzelheiten hierzu sind in der Spezifikation 3GPP TS 23.060 "GPRS Service Description, Stage 2" angegeben. Unterschiedlich sind sie hinsichtlich der verschiedenen QoS ("Quality of Service")-Profile der unterschiedlichen Secondary PDP Contexts.

In der dritten Prozedur DI von Figur 2 mit dem Namen "3. CSCF Discovery" wird dem Funkkommunikationsgerät UE1 die Adresse, insbesondere die sogenannte FQDN ("Full Qualified Domain Name")- oder IP-Adresse, der jeweilig zuständigen P-CSCF ("Proxy-Call State Control Function") des IMS IPS1 mitgeteilt. Dies kann gegebenenfalls auch als Teil der Signalisierung innerhalb der "PDP Context Activation" Prozedur CA von Figur 2 erfolgen oder durch die Verwendung eines sogenannten DHCPv6 (Dynamic Host Control Protocol)-Protokolls. Anschließend kann sich das Funkkommunikationsgerät UE1 über die vierte Prozedur REG mit dem Namen "4. Application Level Registration" über die P-CSCF-Komponente des IMS bei der S-CSCF (Serving CSCF)-Komponente im IMS des Heimatkernnetzwerkes, d.h. des Home Networks, registrieren bzw. anmelden. Dabei übernimmt die S-CSCF-Komponente im IMS des Heimatkernnetzwerkes die Rolle eines SIP (Session Initiation Protocol) Registrars.

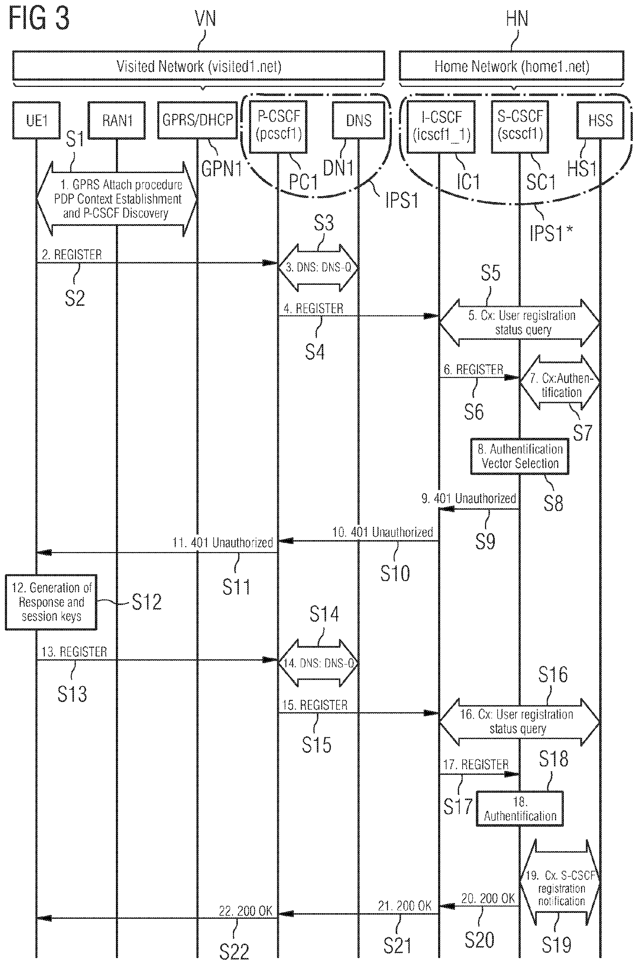

Figur 3 zeigt den Ablauf von Signalisierungsnachrichten zur initialen Registrierung bzw. Anmeldung einer PUID für das Funkkommunikationsgerät UE1 im IMS IPS1 des Heimatkernnetzwerkes HN. Details zu diesem Signalfluss sind insbesondere in der Spezifikation 3GPP TS 24.228 "Signalling Flows the IP Multimedia Subsystem based on SIP and SDP" angegeben. Hier im Ausführungsbeispiel von Figur 3 hält sich das Funkkommunikationsgerät UE1 beispielsweise in der Funkzelle eines fremden Funkkommunikationssystems auf, das hier mit VN bezeichnet ist und den Namen "Visited Network (visited1.net)" trägt. Zwischen dem Funkkommunikationsgerät UE1 und den Komponenten dieses besuchten, fremden Funkkommunikationsnetzwerks VN sowie zwischen den Komponenten des fremden Funkkommunikationsnetzwerks VN und Komponenten des Heimatkernnetzwerkes HN werden Steuer- und Kontrollsignale zum Anmelden des Funkkommunikationsgeräts unter seiner PUID im IMS des Heimatkernnetzwerkes HN ausgetauscht. Im Einzelnen sendet das Funkkommunikationsgerät UE1 über seine Luftschnittstelle LS1 ein Steuersignal S1 unter Zwischenvermittlung des sogenannten "Radio Access Networks" RAN1, d.h. Funkzugangsnetzwerks, des von ihm aktuell besuchten Funkkommunikationssystems an dessen GPRS-Kernnetzwerk GPN1, um sich dort anzumelden. Dazu enthält das Steuersignal S1 die Aktivierungsprozeduren BR, CA, DI von Figur 2 gemeinsam. Ggf. können diese Aktivierungsprozeduren auch durch separate Steuersignale gestartet werden.
Nach seiner GPRS-Level-Registrierung überträgt das Funkkommunikationsgerät UE1 ein Registrieranforderungssignal S2 mit dem Namen "2. Register" an eine P-CSCF- Komponente PC1 (mit der Bezeichnung "Proxy Call State Control Function") des "IP-Multimedia Core Network Subsystems" IPS1 des besuchten, fremden Funkkommunikationsnetzwerks VN. Dieses Registrieranforderungssignal S2 enthält eine Nutzeridentität PUID, mit der sich der Nutzer des Funkkommunikationsgeräts UE1 explizit registrieren lassen möchte. Die P-CSCF-Komponente PC1 fragt nach Erhalt des Registrieranforderungssignals S2 bei einem zugeordneten Domainnamen-Server ("Domain Name Server": abgekürzt DNS) DN1 nach, welche I-CSCF - Komponente und damit welches Heimatkernnetzwerk HN bzw. IMS für die PUID des Nutzers zuständig ist. Die Nutzerkennung PUID wird also durch den Domainnamen-Server DN1 auf die IP-Adresse der I-CSCF-Komponente abgebildet. Der dazugehörige Signalaustausch zwischen der P-CSCF-Komponente PC1 und dem Domainnamen-Server DN1 ist in der Figur 3 durch einen Doppelpfeil S3 angedeutet. Aufgrund dieser abgerufenen Information, dass die Nutzerkennung bzw. PUID einem bestimmten IMS- Kernnetzwerk zugewiesen ist, leitet die P-CSCF-Komponente PC1 das Registrieranforderungssignal S4 an die zuständige I-CSCF (Interrogating Call State Control Function)-Komponente IC1 im IMS PS1* des Heimatkernnetzes HN weiter. Die I-CSCF-Komponente IC1 bildet dabei einen Eintrittspunkt bzw. Zugangspunkt zum IMS IPS1*. Die I-CSCF-Komponente IC1 fragt mittels eines Anforderungssignals S5 alle für eine Weiterleitung der Anfrage notwenigen Informationen bei einem Datenbankserver, insbesondere dem sogenannten HSS (Home Subscriber Server) des IMS IP1*, ab. Hierzu sendet die I-CSCF-Komponente u.a. die PUID an das HSS. Die I-CSCF- Komponente wählt daraufhin eine geeignete S-CSCF Komponente als Registrar aus und leitet die Anfrage mittels der Nachricht S6 an die ermittelte, zuständige S-CSCF-Komponente SC1 weiter. Würde die PUID dem HSS nicht bekannt sein, dann würde an dieser Stelle ein Abbruch der Registrierungsprozedur erfolgen und eine Fehlermeldung an das Funkkommunikationsgerät UE1 übertragen werden. Wurde die Registrierungsnachricht nicht mit einem Integritätsschutz versehen, dann wird das Funkkommunikationsgerät UE1 an dieser Stelle herausgefordert (Challenge). Hierzu fragt die S-CSCF-Komponente SC1 einen "Authentication Vector" mittels eines Anfragesignals S7 beim HSS ab, das alle hierfür notwendigen Parameter enthält. Mittels der Nachrichten S9 bis S11 wird dem Funkkommunikationsgerät UE1 die Herausforderung übermittelt. Das Funkkommunikationsgerät UE1 generiert daraufhin die notwendige Antwort auf die Herausforderung, welche mittels der Nachrichten S12 bis S17 zur S-CSCF-Komponente SC1 übermittelt wird. Anschließend erfolgt in Schritt S18 "18. Authentication" die Überprüfung, ob die Antwort korrekt ist. Ist dies der Fall, so wird die PUID in der S-CSCF-Komponente SC1 registriert. Die Registrierung wird mittels einer Nachricht S19 dem HSS angezeigt. Mit den Nachrichten S20 bis S22 wird dem Funkkommunikationsgerät UE1 die erfolgreiche Registrierung der PUID angezeigt. Dabei werden dem Funkkommunikationsgerät UE1 ebenfalls die implizit registrierten PUID übermittelt.

Mittels dieser Registrierabfolge wird nicht nur die PUID des Nutzers des Funkkommunikationsgeräts UE1 registriert, sondern gleichzeitig auch ein Lokalisierungsservice realisiert. Denn während der Registrierung wird die aktuelle Kommunikationsadresse, insbesondere PUID des Benutzers des Funkkommunikationsgeräts UE1, mit der jeweiligen aktuellen Kontaktadresse, insbesondere IP-Adresse des Funkkommunikationsgeräts UE1 assoziiert, d.h. in Beziehung zueinander gesetzt. Die aktuelle Kontaktadresse des Funkkommunikationsgeräts UE1 enthält dabei dessen aktuelle IP-Adresse oder FQDN (Fully Qualified Domain Name). Diese Kontaktadresse ist entweder von statischer oder dynamischer Natur. Wie bereits beschrieben wurde, wird dem Funkkommunikationsgerät bzw. UE ("user equipment) zur Zeit die IP-Adresse während der Prozedur "2. PDP Context Activation" aus Figur 2 zugewiesen. Es ist weiterhin denkbar, dass eine statische IP-Adresse Verwendung findet, die z.B. auf der sogenannten USIM ("UMTS Subscriber Identity Module") oder ISIM ("IMS SIM") - Karte gespeichert ist. In der S-CSCF-Komponente SC1 des Heimat-IMS IPS1* wird auf diese Weise eine Bindung, d.h. logische Verknüpfung, zwischen der aktuellen Kontaktadresse des Funkkommunikationsgeräts UE1 und der Nutzerkennung, insbesondere PUID des aktuellen Benutzers des Funkkommunikationsgeräts UE1 erzeugt. Diese Assoziationsdaten werden dort gespeichert. Wird eine Nachricht an die Nutzerkennung, insbesondere PUID, des Nutzers des Funkkommunikationsgeräts UE1 von einem anderen Funkkommunikationsgerät wie z.B. UE2 gerichtet, so ruft die S-CSCF-Komponente SC1 im Heimatkernnetz HN diese Assoziationsdaten ab und leitet die Kommunikationsnachricht daraufhin an die aktuelle Kontaktadresse des Nutzers weiter. Auf diese Weise ist der jeweilige Nutzer unter seiner fest zugeordneten Nutzerkennung, insbesondere PUID, stets adressierbar bzw. erreichbar. Die Registrierung stellt also ein Verfahren zur Verfügung, durch welches das Heimatkernnetzwerk immer den aktuellen Aufenthaltsort bzw. die aktuelle Aufenthaltsadresse des jeweiligen Nutzers erfahren kann. Es ist weiterhin möglich, eine PUID von mehreren Endgeräten aus zu registrieren. Im IMS des Heimatkernnetzes ist es weiterhin möglich, dass bei der initialen Registrierung gleichzeitig weitere PUIDs in der S-CSCF-Komponente mit der aktuellen Kontaktadresse des jeweiligen Nutzers assoziiert werden. Dabei kann die S-CSCF-Komponente gegebenenfalls auf weitere PUIDs des Nutzers in der Datenbasis des Datenbank-Servers (HSS) zurückgreifen, so dass es nicht erforderlich ist, weitere PUIDs vom jeweiligen Funkkommunikationsgerät wie z.B. UE1 an die S-CSCF-Komponente im Heimat-IMS wie z.B. IPS1* zu übertragen. Die Verknüpfung zwischen PUIDs, die bereits in der Datenbasis des Datenbank-Servers wie z.B. HS1 des Heimat-IMS wie z.B. IPS1* hinterlegt sind, mit der aktuellen Kontaktadresse des jeweiligen Nutzers wird dabei, wie oben beschrieben wurde, als implizite Registrierung bezeichnet. Demgegenüber wird die Übertragung der jeweilig zu registrierenden PUID vom jeweiligen Funkkommunikationsgerät zur S-CSCF-Komponente wie z.B. SC1 des Heimat-IMS explizite Registrierung genannt.

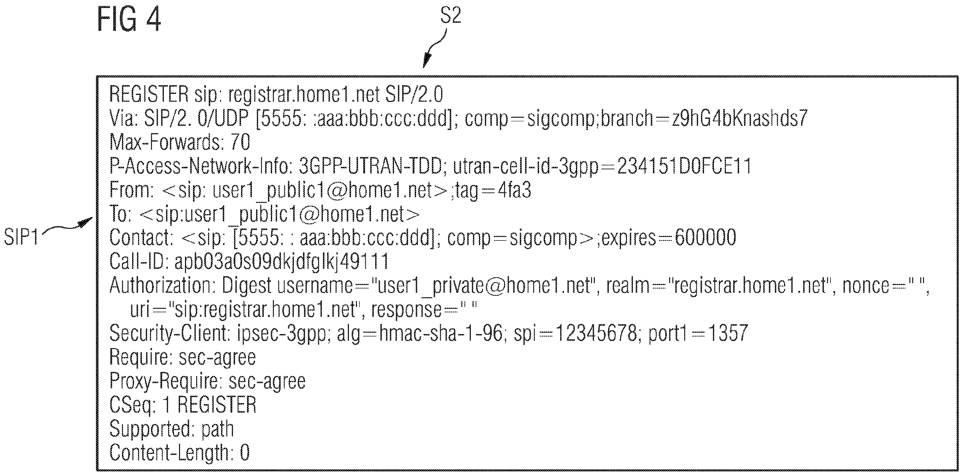

Figur 4 zeigt die Registrieranforderungsnachricht S2 von Figur 3 im Detail. Die zu registrierende PUID des Nutzers des Funkkommunikationsgeräts UE1 ist im "To"-Headerfeld" SIP1 des Registrieranforderungssignals S2 enthalten. Im Feld mit dem Namen "From" wird die PUID des Nutzers angegeben, die Quelle dieser Nachricht S2 ist. Im vorliegenden Ausführungsbeispiel, bei dem sich der Nutzer des Funkkommunikationsgeräts UE1 selbst registriert, sind im "To"-Headerfeld" und im "From"-Headerfeld" dieselben PUIDs enthalten. Die mit der PUID zu assoziierende Kontaktadresse in Form einer SIP URI, insbesondere IP-Adresse ohne User Part, ist im Abschnitt mit dem Namen "Contact-Header" der Registrieranforderungsnachricht S2 eingetragen. Die Kontaktadresse enthält dabei die aktuelle IP-Adresse oder FQDN-Adresse des Funkkommunikationsgeräts UE1, an dem der Nutzer momentan erreichbar ist.

Auf diese Weise kann das jeweilige Funkkommunikationsgerät lediglich unter einer solchen PUID im IMS seines Heimat-Funkkommunikationssystems registriert werden, die dort bereits im Datenbankserver wie z.B. HS1 zuvor dauerhaft abgespeichert worden ist. Dadurch ist lediglich eine fixe, unveränderliche Zuordnung von ein oder mehreren PUIDs zum jeweiligen Nutzer bereitgestellt. Ist nun ein Nutzer unter seiner PUID im IMS seines Heimat-Funkkommunikationsnetzes registriert, so ist er unter dieser PUID auch von anderen Kommunikationsteilnehmern adressierbar. Die PUIDs werden im allgemeinen über öffentliche Verzeichnisse zugänglich gemacht oder auch z.B. auf Visitenkarten abgedruckt.

Um im Hinblick darauf Persönlichkeits- und Sicherheitsaspekten Rechnung zu tragen, ist es unter manchen Gegebenheiten wünschenswert, die Identität des jeweiligen Nutzers für andere Teilnehmer gerade nicht bekannt zu geben oder zugänglich zu machen. Mit anderen Worten ausgedrückt heißt das, dass eine Weitergabe oder Verfügbarmachung der permanenten bzw. statischen PUID des jeweiligen Nutzers für vorgebbare Kommunikationsverbindungen an andere Nutzer als zu riskant oder als unzulässig betrachtet wird. Ein Identitätsschutz ist insbesondere für eine Teilnehmergruppe an einem Konferenzservice wie z.B. einem Multimediakonferenzservice gegenüber außenstehenden, nicht beteiligten Kommunikationsgeräten, aber ggf. auch innerhalb der Teilnehmergruppe selbst eine relevante Grundfunktion. Um zu erreichen, dass die Identität des jeweiligen Nutzers eines bestimmten Funkkommunikationsgerätes für andere Funkkommunikationsgeräte anonym, d.h. unzugänglich bleibt, wird von diesem Funkkommunikationsgerät oder von einer diesem zugeordneten Registrier- bzw. Adressverwaltungseinheit im Funknetzwerk des Funkkommunikationssystems mindestens eine temporäre Kommunikationsadresse zusätzlich oder unabhängig zur jeweilig permanent, d.h. statisch zugewiesenen Kommunikationsadresse generiert. Diese temporäre Kommunikationsadresse wird in der Adressverwaltungseinheit registriert und mit der aktuellen Kontaktadresse des Funkkommunikationsgeräts, die ggf. auch mit einer statisch zugewiesenen Kommunikationsadresse assoziiert sein kann, für einen vorgebbaren Zeitraum assoziiert. Lediglich diese temporäre Kommunikationsadresse des Funkkommunikationsgeräts wird dann ein oder mehreren anderen Funkkommunikationsgeräten zum Kommunikationsaustausch zugänglich gemacht, während die permanent zugewiesene Kommunikationsadresse für diese anderen Funkkommunikationsgeräte unsichtbar bzw. versteckt bleibt. Durch die Generierung und Registrierung von temporär gültigen Nutzeridentitäten, insbesondere in Form von temporären PUIDs (temporäre Public User Identities) können insbesondere im IMS Multimediasitzungen zwischen Nutzern etabliert werden, ohne dass es erforderlich ist, dass deren permanente bzw. statische PUIDs benutzt und gegenseitig bekannt gegeben werden. Auf diese Weise wird auch beim Aufbau von beliebigen Multimediasitzungen außerhalb der Konferenzumgebung der Persönlichkeits- und Sicherheitsgedanke konsequent eingehalten. Weiterhin kann es vorteilhaft sein, dass von dem sich jeweilig temporär anmeldenden Funkkommunikationsgerät oder der Adressverwaltungseinheit für die Abfrage seiner temporären Kommunikationsadresse jeweils ein Bezugsrecht vergeben wird. Mit diesem Bezugsrecht wird der Zugriff oder die Sperre auf die temporäre Kommunikationsadresse dieses Funkkommunikationsgeräts gesteuert.

Um nun zwischen mehreren "User Agents" einen Kommunikationsdienst, insbesondere eine Multimediasitzung aufzubauen, ohne dass dabei auf die statisch vergebenen Nutzeridentitäten des IMS im Heimatkernnetz zurückgegriffen wird, werden zwischen dem jeweiligen Nutzer eines User Agents wie z.B. eines beteiligten Funkkommunikationsgeräts und der Registrierungs- bzw. Adressverwaltungseinheit im IMS ein oder mehrere temporär gültige Nutzeridentitäten ausgehandelt und registriert. Nur unter der jeweilig temporär gültigen Nutzeridentität bzw. Kommunikationsadresse ist dann der jeweilig am Kommunikationsdienst beteiligte Nutzer im IMS für die anderen beteiligten Nutzer erreichbar. Durch die Verwendung temporär gültiger Kommunikationsadressen wird die Anonymität des jeweilig beteiligten Nutzers gewahrt. Die permanent zugewiesene Kommunikationsadresse des jeweiligen Nutzers bleibt für andere Nutzer sowohl innerhalb des jeweiligen Kommunikationsdienstes als auch nach außen für andere Kommunikationsteilnehmer geheim, so dass ein unberechtigter oder missbräuchlicher Zugriff auf die statisch zugewiesene Kommunikationsadresse weitgehend vermieden ist. Die temporär gültig vergebene Nutzeridentität bzw. Kommunikationsadresse entspricht dabei der Funktion nach einem Pseudonym des jeweiligen Nutzers für einen bestimmten vorgegebenen Zeitraum und Zweck.

Für die Registrierung einer temporären Nutzeridentität bzw. Kommunikationsadresse ist deren Eineindeutigkeit Voraussetzung, um eine einwandfreie Identifikation des jeweiligen Nutzers für andere Teilnehmer sowie Netzwerkkomponenten zu ermöglichen. Dazu sendet der jeweilige Nutzer ein oder mehrere selbst generierte temporäre Nutzeridentitäten an eine Registrierungs- bzw. Adressverwaltungseinheit, insbesondere an ein Netzwerkelement, das die Aufgaben eines sogenannten SIP-Registrars übernimmt.

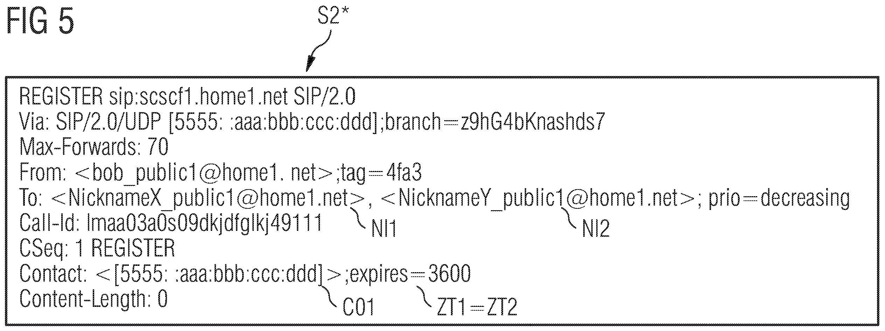

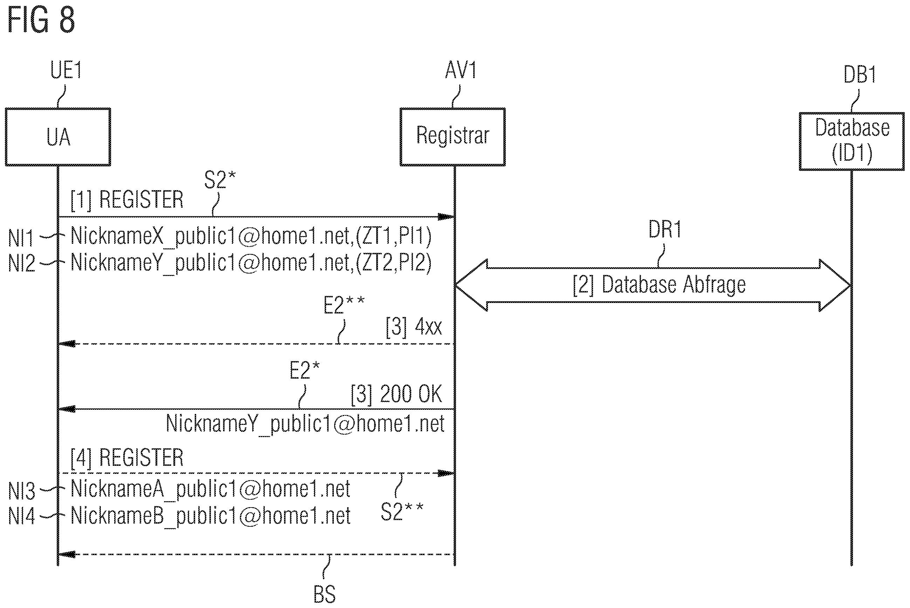

Figur 8 veranschaulicht ein erstes vorteilhaftes Verfahren zur Aushandlung und Registrierung einer temporär gültigen Kommunikationsadresse beispielhaft für einen Nutzeragenten (User Agent) UA des Funkkommunikationsgeräts UE1. Die Nutzeridentitäten werden in diesem Ausführungsbeispiel gemäß der Spezifikation IETF RFC3261 "Session Initiation Protocol (SIP)" verallgemeinernd als "Address-of-Record (AOR)" bezeichnet. Vom User Agent UA des Funkkommunikationsgeräts UE1 werden in einem Registrierungsanforderungssignal S2* mit dem Namen "(1) Register" mehrere Nutzeridentitäten an den Registrar bzw. die Registrierungseinheit AV1 im Netzwerk des Funkkommunikationssystems RN (siehe Figur 1) gesendet. Der Registrar AV1 wird dabei im IMS durch die S-CSCF-Komponente des Heimatkernnetzes gebildet (siehe Figur 3). Hier im Ausführungsbeispiel von Figur 8 enthält das Registrieranforderungssignal S2* beispielsweise zwei temporäre Nutzeridentitäten NI1, NI2. Für diese ist seitens des Nutzers des Funkkommunikationsgeräts UE1 eine zeitlich begrenzte, d.h. temporäre Hinterlegung in einer Datenbasis bzw. Speichereinheit DB1 des Heimatkernnetzes mittels des Registrars AV1 gewünscht. Der Inhalt des Registrieranforderungssignals S2* ist dabei in der Figur 5 detailliert wiedergegeben. Die erste temporäre Nutzeridentität NI1 ist dort durch eine AoR bzw. PUID mit dem Namen "NicknameX_public1@home1.net" gebildet. Die seitens des Nutzers des Funkkommunikationsgeräts UE1 vorgeschlagene, zweite temporäre Kommunikationsadresse NI2 hat hier den Namen "NicknameY_public1@home1.net". Für die vorgeschlagene erst temporäre Kommunikationsadresse NI1 ist dabei eine Nutzungszeitdauer ZT1 und eine bestimmte Priorität PI1 vorgegeben. Diese Parameter sind in der Figur 8 in Klammern hinter die temporäre Kommunikationsadresse NI1 gesetzt. In entsprechender Weise ist der zweiten vorgeschlagenen temporären Kommunikationsadresse NI2 spezifisch eine Nutzerzeitdauer ZT2 sowie ein Rang bzw. eine Priorität PI2 für die Abarbeitungsreihenfolge im Registrar AV1 zugeordnet. Werden wie hier mehrere Nutzeridentitäten vom jeweiligen User Agent des Funkkommunikationsgeräts des jeweiligen Nutzers an den Registrar gesendet, so ist es also zweckmäßig, eine definierte Registrierungspriorität vorzugeben, unter deren Berücksichtigung eine der vorgeschlagenen AoRs, d.h. allgemein ausgedrückt temporären Kommunikationsadressen, vom Registrar registriert wird. Nach einem ersten vereinfachten Auswahlkriterium gibt die Stellung der jeweiligen AoR innerhalb der übermittelten Vorschlagsliste deren relative Priorität zueinander an. Auf diese Weise wird angegeben, dass z.B. die erste in der Liste aufgeführte und noch nicht vergebene temporäre Kommunikationsadresse registriert werden soll. In Figur 8 prüft der Registrar AV1 nach Empfang des Registrieranforderungssignals S2*, ob die übermittelten temporären Kommunikationsadressen NI1, NI2 bereits in seiner Domain vergeben worden sind. Dazu durchsucht der Registrar AV1 mittels Abfragesignale DR1 die ihm zugeordnete Datenbank DB1. In dieser Datenbank DB1 werden alle temporär und permanent vergebenen Kommunikationsadressen, insbesondere AoRs der Domain gespeichert. Ist mindestens eine der vom Funkkommunikationsgerät UE1 an den Registrar AV1 übertragenen, vorgeschlagenen temporären Kommunikationsadressen noch nicht vergeben worden, so registriert der Registrar AV1 diese vom Funkkommunikationsgerät UE1 vorgeschlagene temporäre Kommunikationsadresse. Im Ausführungsbeispiel von Figur 8 stellt der Registrar AV1 fest, dass die im Registrieranforderungssignal S2* übermittelte Kommunikationsadresse NI1 mit der höchsten Priorität PI1 (NicknameX_public1@home1.net) bereits von einem anderen User Agent in der Datenbank DB1 registriert worden ist und daher nicht mehr zur weiteren Vergabe zur Verfügung steht. Deshalb registriert der Registrar AV1 die zweite vom Funkkommunikationsgerät UE1 übermittelte temporäre Kommunikationsadresse NI2 mit dem Namen "NicknameY_public1@home1.net". Weiterhin erzeugt der Registrar eine Assoziation bzw. Verknüpfung ("Binding") mit der in der Registrieranforderungsnachricht S2* ebenfalls enthaltenen aktuellen Kontaktadresse CO1 (siehe Figur 5) des Funkkommunikationsgeräts. Da die Verknüpfung lediglich zwischen der temporär vergebenen Kommunikationsadresse NI2 und der aktuellen Kontaktadresse CO1 des Funkkommunikationsgeräts UE1 erfolgt, lässt diese Assoziation ebenfalls keinen Rückschluss auf den Nutzer des Funkkommunikationsgeräts UE1 zu bzw. ist nach Ablauf der Gültigkeit der temporären Kommunikationsadresse keine Kontaktaufnahme unter ihrer Verwendung mehr möglich. Dies gilt insbesondere, sofern eine dynamische IP-Adresse für die mit der temporären Kommunikationsadresse assoziierten Kontaktadresse verwendet wird. Es ist daher zweckmäßig, für alle mit der temporären AoR zusammenhängenden Nachrichten eine neue Kontaktadresse, insbesondere eine IP-Adresse, dynamisch zu verwenden. Dies kann z.B. im IMS durch die Aktivierung und Verwendung eines neuen Primary PDP Contexts erfolgen.

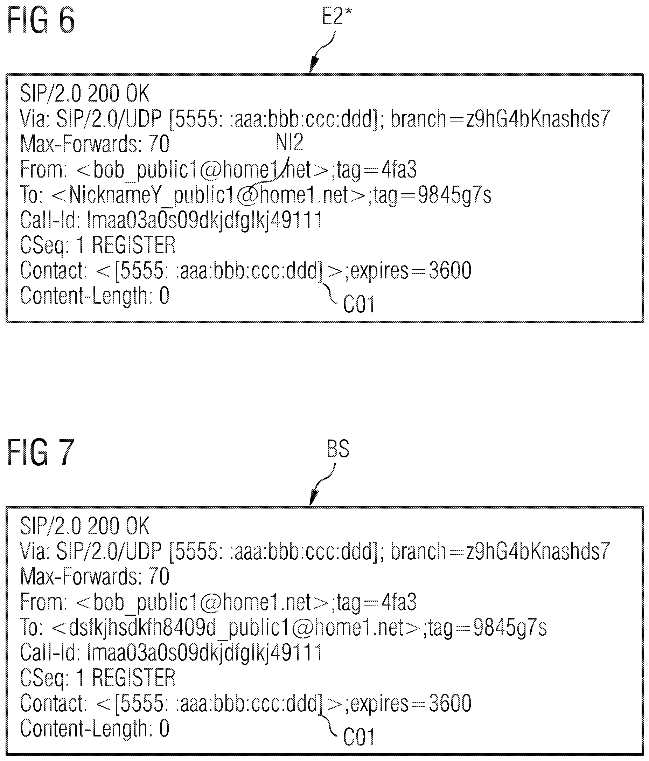

Nach der Registrierung der vorgeschlagenen, zweiten temporären Kommunikationsadresse NI2 sendet der Registrar AV1 die registrierte temporäre Kommunikationsadresse NI2 in einem Bestätigungssignal E2* (siehe auch Figur 6) an das Funkkommunikationsgerät UE1 zurück. Damit weiß nun der User Agent UA im Funkkommunikationsgerät UE1, dass die zweite temporäre Kommunikationsadresse NI2 seiner temporär vorgeschlagenen Kommunikationsadressen vom Registrar AV1 akzeptiert worden ist und er nunmehr für andere Teilnehmer unter dieser Kommunikationsadresse NI2 temporär für die spezifische Nutungszeitdauer ZT2 erreichbar ist.

Sind die vom User Agent UA des Funkkommunikationsgeräts UE1 an den Registrar AV1 im Registrieranforderungssignal S2* übermittelten, vorgeschlagenen temporären Kommunikationsadressen bereits vergeben, dann sendet der Registrar AV1 daraufhin eine Fehlermeldung E2** an das Funkkommunikationsgerät UE1 zurück. Hier im Ausführungsbeispiel von Figur 8 ist die Fehlernachricht E2** (siehe auch Figur 7) beispielsweise durch eine 4XX-Nachricht, d.h. z.B. durch die Nummer 403 oder 409 gebildet, mittels der dem User Agent UA des Funkkommunikationsgeräts UE1 die fehlgeschlagene Registrierung angezeigt wird. Diese Fehlernachricht E2** ist in der Figur 8 lediglich gestrichelt eingezeichnet, um zu verdeutlichen, dass sie eine alternative Nachricht ist. Nach Erhalt der Fehlernachricht E2** sendet der User Agent UA des Funkkommunikationsgeräts UE1 eine neue Registrieranforderungsnachricht S2** mit neu generierten, temporären Kommunikationsadressen NI3, NI4 an den Registrar AV1, die von den ersten beiden vorgeschlagenen Kommunikationsadressen NI1, NI2 verschieden sind. Diese Signalisierung ist in der Figur 8 zusätzlich ebenfalls gestrichelt mit eingezeichnet. Die erste neue Kommunikationsadresse NI3 ist durch eine AoR bzw. PUID
"NicknameA_public1@home1.net" gebildet. Die zweite vorgeschlagene Kommunikationsadresse NI4 mit einer gegenüber der ersten Kommunikationsadresse NI3 niedrigeren Priorität lautet in diesem Beispiel "NicknameB_public1@home1.net". Mit diesen beiden neu vorgeschlagenen, temporären Kommunikationsadressen NI3, NI4 startet der Registrar AV1 in analoger Weise zum ersten Anmeldeversuch den Registriervorgang für den Nutzer des Funkkommunikationsgeräts UE1.

Ist keine der in der Registrieranforderungsnachricht enthaltenen Kommunikationsadressen netzwerkseitig im IMS mehr verfügbar, dann kann der Registrar AV1 gegebenenfalls auch von sich aus eine zufällige und noch nicht vergebene, temporäre Kommunikationsadresse generieren und für den jeweilig anfragenden User Agent registrieren. Die erfolgreich registrierte und mit der aktuellen Kontaktadresse assoziierte temporäre Kommunikationsadresse wird dem User Agent UA des Funkkommunikationsgeräts UE1 schließlich mittels einer Bestätigungsnachricht BS angezeigt. Diese ist in der Figur 8 zusätzlich gestrichelt eingezeichnet.

Die vorgeschlagenen, zu registrierenden temporären AoRs bzw. PUIDs können dabei, wie in Figur 5 angegeben wurde, im "To-Header" der jeweilig übermittelten Nachricht wie z.B. S2* oder E2* übertragen werden. Alternativ kann hierfür auch ein separater "Header" verwendet werden oder die temporären AoRs bzw. PUIDs werden im Nachrichtenkörper der jeweiligen SIP Nachricht übertragen. In diesem Fall ist die Angabe einer statischen AoR bzw. PUID im "To-Header" möglich, da diese dann nur in der Registrierungsprozedur zwischen dem User Agent UA und dem Registrar AV1 verwendet wird und nicht in Nachrichten zwischen verschieden User Agents (UAs). Zwischen diesen verschiedenen User Agents wird zweckmäßigerweise nur die registrierte temporäre Kommunikationsadresse verwendet. Dies gilt entsprechend auch für die Übermittlung der vom Registrar registrierten temporären AoR bzw. PUID. Die registrierte temporäre AoR kann ebenfalls in einem separaten "Header" oder im Nachrichtenkörper der Bestätigungsnachricht wie z.B. E2* "200 OK" übertragen werden.

Die zeitliche Gültigkeit der jeweilig ausgehandelten und registrierten temporären Kommunikationsadresse wird über einen sogenannten "Expire Header" oder "Expire Parameter" als Nutzungszeitdauer (siehe in Figur 8 ZT1, ZT2) angegeben. Läuft dieser Wert ab, so wird das erzeugte "Binding" aufgelöst und die temporäre Kommunikationsadresse wieder freigegeben, d.h. sie ist nunmehr wieder allgemein verfügbar und kann wieder von beliebigen User Agents erneut registriert werden. Eine nicht registrierte, temporäre Kommunikationsadresse kann nicht zur Adressierung verwendet werden, d.h. der jeweilige User Agent wie z.B. UA ist nie wieder über dieselbe temporäre Kommunikationsadresse erreichbar, sofern jedes Mal eine andere temporäre Kommunikationsadresse verwendet wird.

Ein User Agent, der Kontakt zu einem anderen User Agent aufnehmen möchte, benötigt die Kenntnis über dessen temporär vergebener Kommunikationsadresse. Dazu wird die erfindungsgemäß temporär ausgehandelte und registrierte Kommunikationsadresse, insbesondere AoR bzw. PUID, demjenigen User Agent bekannt gemacht, der mit dem registrierten User Agent in Kontakt treten will. Hierzu eignet sich insbesondere die sogenannte "REFER Methode" (RFC3515), die "INFO Methode" (RFC2976) oder die "PUBLISH Methode". In einer sogenannten "Tightly Coupled Conference" wird mittels dieser Methoden die hier beschriebene temporär gültige AoR innerhalb der Konferenzumgebung verteilt. Dazu sendet das jeweilige Funkkommunikationsgerät z.B. ein entsprechendes Anfragesignal ("INFO Request") an einen sogenannten "Conference Focus", der die AoR dann weiterverteilt. Die Weiterverteilung erfolgt dabei mittels SIP-Methoden oder über andere Protokolle wie z.B. XCAP. Die Verteilung kann insbesondere selektiv oder auch allgemein erfolgen. Für eine selektive Verteilung werden innerhalb der genannten Methoden die relevanten Nutzer bzw. User Agents spezifiziert. Dies kann unter anderem über die in der Konferenz verwendeten Nicknames bzw. Pseudonyme oder AoRs erfolgen.

Zusammenfassend betrachtet wird zwischen dem jeweiligen User Agent eines Funkkommunikationsgeräts und einem Registrar im Heimatkernnetzwerk mindestens eine temporär gültige Kommunikationsadresse, insbesondere PUID, ausgehandelt und registriert. Bei einem 3GPP-Funkkommunikationssystem ist dabei der Registrar durch die S-CSCF-Komponente des Heimatkernnetzes gebildet, dem ein Datenbank-Server, insbesondere HSS, zugeordnet ist. Zur Registrierung einer temporären Kommunikationsadresse für das jeweilig an einem Kommunikationsdienst teilnehmende Funkkommunikationsgerät sind insbesondere folgende Schritte zweckmäßig:
- Generierung von mindestens einer zu registrierenden AoR bzw. PUID durch den User Agent des Funkkommunikationsgeräts.
- Übertragung mindestens einer AoR bzw. PUID vom User Agent an den Registrar bzw. die S-CSCF/HSS-Komponente im Funkkommunikationsnetzwerk.
- Definition und Vergabe relativer Prioritäten zwischen den AoRs bzw. PUIDs, die vom User Agent an den Registrar als Vorschlag übermittelt werden.
- Verwendung einer neu allokierten, temporär gültigen IP-Adresse/FQDN als Kontaktadresse für die übertragenen A-oRs/PUIDs.
- Prüfen, ob die übertragenen AoRs bzw. PUIDs durch den Registrar bzw. die S-CSCF-Komponente bereits in einer entsprechenden Domain registriert worden sind.
- Registrierung der noch nicht registrierten AoR bzw. PUID mit der höchsten Priorität, sofern mehrere vom User Agent an den Registrar gesendet worden sind.
- Zurückübertragung und Bekanntmachung der jeweilig registrierten AoR bzw. PUID an den zu registrierenden User Agent.
- Generierung einer zufälligen AoR bzw. PUID durch den Registrar bzw. die S-CSCF-Komponente, sofern die vom User Agent übertragenen AoRs bzw. PUIDs bereits anderweitig vergeben worden sind.

Vorteilhaft ist die Verwendung von temporär gültigen PUIDs innerhalb einer Multimediakonferenzumgebung. Unabhängig hiervon können von einem Nutzer eines Funkkommunikationsgeräts auch ein oder mehrere temporär gültige PUIDs bzw. Kommunikationsadressen auch für sonstige Kommunikationszwecke mit anderen Kommunikationsgeräten verwendet werden.

Nachfolgend wird anhand zweier Ausführungsbeispiele detaillierter auf den Inhalt der Registrieranforderungsnachrichten S2* sowie S2** von Figur 8 eingegangen.

### 1. Ausführungsbeispiel:

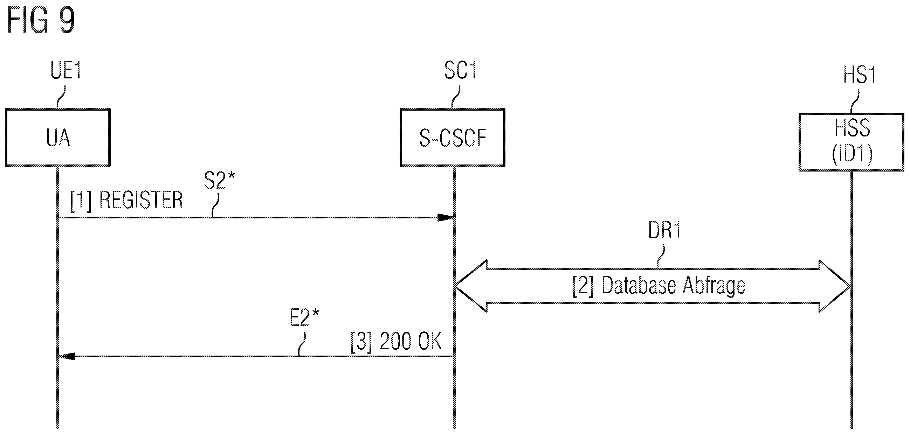

Hierbei wird angenommen, dass die Registrieranforderungsnachricht S2* von Figur 9 eine AoR enthält, die noch nicht in der Domain des Registrars AV1 vergeben bzw. von einem anderen Funkkommunikationsgerät registriert worden ist. Dabei wird die AoR im folgenden 3GPP- konform als PUID bezeichnet. Der Registrar AV1 wird hier im Ausführungsbeispiel 3GPP- konform durch die S-CSCF-Komponente SC1 im IMS IPS1 des Heimat-Funkkommunikationsnetzwerks HN von Figur 3 gebildet.

Figur 9 veranschaulicht den Signalfluss zwischen den beteiligten Komponenten SC1, HS1 des IMS IPS1 und dem User Agent UA des Funkkommunikationsgeräts UE1. Vom User Agent UA des Funkkommunikationsgeräts UE1 wird eine temporär gültige PUID vorgeschlagen und mittels eines Registrieranforderungssignals S2* an die S-CSCF-Komponente SC1 des IMS im Heimat-Funkkommunikationsnetzwerk HN des Funkkommunikationsgeräts UE1 übermittelt (siehe auch Figur 5). Die S-CSCF-Komponente SC1 überprüft mittels eines Anfragesignals DR1, ob diese vorgeschlagene temporär gültige PUID bereits in der Adressverwaltungseinheit bzw. Datenbasis HS1 abgelegt worden ist. Ist das noch nicht der Fall, d.h. die PUID noch frei vergebbar, so führt die S-CSCF-Komponente SC1 als Registrar die Registrierung dieser temporären PUID in der Datenbasis HS1 durch. Das Ergebnis der erfolgreichen Registrierung teilt die S-CSCF-Komponente SC1 dem User Agent UA des Funkkommunikationsgeräts UE1 durch das Antwortsignal E2* (siehe auch Figur 6) mit. In diesem Antwortsignal E2* ist dabei die registrierte PUID in vorteilhafter Weise enthalten.

Der Inhalt der gesendeten Registrieranforderungsnachricht S2* ist detailliert in der Figur 5 angegeben. Das "To"-Headerfeld dieser Registrieranforderungsnachricht S2* enthält mindestens eine PUID. Hier weist das "To"-Headerfeld die in Figur 8 angegebenen PUIDs "NicknameX_public1@home1.net" und "NicknameY_public1@home1.net" auf. Weiterhin enthält das "To"-Headerfeld einen neuen Parameter, der die Priorisierung der vorgeschlagenen PUIDs NI1, NI2 spezifiziert. Durch die zusätzliche Angabe "prio=degreasing" wird festgelegt, dass die Priorität von der zuerst aufgeführten PUID ausgehend abfällt. Hierzu kann es zweckmäßig sein, ein separates Headerfeld anzulegen, das dieselbe Funktionalität bietet. Weiterhin kann zur Übertragung der temporär zu registrierenden PUIDs ebenfalls ein neues Headerfeld definiert werden. Mit anderen Worten ausgedrückt heißt das, dass die Aufgabe der "To"-Header-Zeile im Registrieranforderungssignal S2* ggf. auch durch andere Headerfelder erfüllt werden kann.

Eine weitere vorteilhafte Variante zur Übertragung der PUIDs besteht darin, diese in einem neu definierten Nachrichtenkörper der Registrieranforderungsnachricht (SIP-Body) zu übertragen. In diesem Ausführungsbeispiel sind die PUIDs des "From"- und "To"-Headerfeldes verschieden. Im From-Headerfeld der Nachricht S2* kann eine PUID angegeben werden, die auf der ISIM (IMS SIM = Subscriber Identity Module) des Funkkommunikationsgeräts UE1 gespeichert worden ist. Gegebenenfalls kann es auch zweckmäßig sein, dass die "From"- und "To"-Headerfelder dieselben PUIDs enthalten. Der Contact Header enthält die aktuelle Kontaktadresse CO1 des Funkkommunikationsgeräts UE1, an die zu registrierende, temporären PUIDs (To-Headerfeld) gesendete Nachrichten übermittelt werden. Im IMS ist die Kontaktadresse identisch mit einer IP-Adresse. Der "expires" Parameter ZT1 =ZT2 gibt die Zeitdauer (in Sekunden) der Registrierung an, d.h. dessen Gültigkeitsdauer. Damit trotz temporär generierter PUID kein Rückschluss auf die Identität des Nutzers möglich ist, ist die Verwendung einer dynamisch vergebenen IP-Adresse - oder allgemeiner ausgedrückt Kontaktadresse - zweckmäßig. Die Kontaktadresse wird beim Aufbau einer Sitzung bzw. Session zwischen dem beteiligten User Agent und dem Registrar ausgetauscht. Einzelheiten hierzu sind in der Spezifikation IETF RFC3261: "Session Initiation Protocol (SIP)" entnehmbar. Demgegenüber könnte nämlich bei Verwendung einer statischen IP-Adresse als Kontaktadresse auch nach Ablauf der Gültigkeit der temporär vergebenen PUID eine Verbindung gegebenenfalls zum Nutzer aufgebaut werden, so dass die gewünschte Anonymität des jeweiligen Nutzers verloren gehen würde. Insbesondere ist die Verwendung eines separaten "PDP Contextes" für alle Nachrichten, die im Zusammenhang mit der Aushandlung, Registrierung und Verwendung der temporär gültigen PUID stehen, zweckmäßig (siehe Figur 8). Hierzu aktiviert das jeweilige Funkkommunikationsgerät z.B. einen neuen "Primary PDP Context". Alternativ kann das Funkkommunikationsgerät UE1 auch einen bereits bestehenden "Primary PDP Context" wiederverwenden. Die in der Kontaktadresse "Contact" CO1 enthaltene IP-Adresse ist in vorteilhafter Weise eine dynamische, d.h. temporäre IP-Adresse.

Mittels der Anfragenachricht DR1 von Figur 9 prüft die S-CSCF-Komponente SC1, ob die in der Registrieranforderungsnachricht S2* im To-Headerfeld enthaltene PUIDs in der Datenbasis HS1 noch nicht registriert worden sind. Als Ergebnis dieser Anfrage wird in diesem Ausführungsbeispiel angenommen, dass die PUID NI1 mit dem Namen "NicknameX_public1@home1.net" bereits vergeben worden ist. Infolgedessen registriert der Registrar SC1 die PUID NI2 mit dem Namen
"NicknameY_public1@home1.net" und erzeugt eine Assoziation bzw. "Binding", indem er die PUID NI2 mit der im Contact Header übertragenen Kontaktadresse assoziiert. Das Ergebnis dieser Registrierung sendet der Registrar SC1 in der Nachricht E2* mit dem Namen "200 OK" an das Funkkommunikationsgerät UE1 zurück. Diese Antwortnachricht E2* enthält dabei die registrierte PUID NI2.
Der Registrar SC1 sendet nur die registrierte PUID NI2 im "To"-Headerfeld an das Funkkommunikationsgerät UE1 zurück. Das Funkkommunikationsgerät UE1 erkennt an dieser Nachricht E2*, dass die Registrierung erfolgreich war (200 OK). Das "To"-Headerfeld gibt dabei an, welche der vorgeschlagenen PUIDs NI1 oder NI2 registriert worden ist. Möglich ist die Übertragung von registrierten PUIDs auch im sogenannten "P-Associated-URI"-Header (3GPP-spezifischer Header, d.h. er ist nur im 3GPP Profile von SIP enthalten). In diesem Fall wird der To-Header nicht von der S-CSCF-Komponente als Registrar verändert. Mit dem Erhalt der Antwortnachricht E2* ist die Registrierung der temporär gültigen PUID NI2 abgeschlossen.
Wird der Nachrichtenkörper der SIP Nachricht (SIP Body) zur Übertragung der PUID verwendet, dann enthält dieser nur noch die ausgewählte bzw. registrierte PUID.

### 2. Ausführungsbeispiel:

Hier wird im Gegensatz zum ersten Ausführungsbeispiel angenommen, dass alle vom Funkkommunikationsgerät UE1 generierten PUIDs bereits vergeben worden sind. Infolgedessen generiert die S-CSCF-Komponente SC1 eine noch nicht verwendete PUID, welche daraufhin für das Funkkommunikationsgerät UE1 registriert wird. Mit anderen Worten ausgedrückt heißt das, dass der Registrar im Heimatkernnetz selbständig eine noch freie, temporäre PUID erzeugt und unter dieser Kennung das Funkkommunikationsgerät UE1 registriert. Der Ablauf der Signalisierungsnachrichten ist in diesem Fall identisch mit dem in Figur 9 angegebenen Signalflussdiagramm. Ein Unterschied zum ersten Ausführungsbeispiel ergibt sich erst bei der Abfragenachricht DR1. Die Abfrage der Datenbasis HS1 liefert im vorliegenden zweiten Ausführungsbeispiel das Ergebnis, dass beide vom Funkkommunikationsgerät UE1 an die S-CSCF-Komponente SC1 übertragenen PUIDs bereits verwendet werden. Daraufhin generiert die S-CSCF-Komponente SC1 eine noch nicht vergebene PUID, z.B.: "dsfkjhsdkfh8409d_public1@home1.net" (siehe Figur 7). Dies erfolgt unter Umständen in Zusammenarbeit mit der Datenbasis HS1. Die S-CSCF-Komponente registriert die generierte PUID und erzeugt dabei eine Assoziation bzw. "Binding" zu der in der Registrieranforderungsnachricht S2* enthaltenen Kontaktadresse CO1 (siehe Figur 5). Die erfolgreiche Registrierung mit der von der Netzwerkkomponente SC1 vergebenen, temporären PUID wird dann dem Nutzer des Funkkommunikationsgeräts UE1 mittels der Antwortnachricht BS (siehe Figur 8) anstatt mit Antwortnachricht E2* (siehe Figur 9) mitgeteilt.

Zusammenfassend betrachtet wird zwischen einem Kommunikationsgerät und einer diesem zugeordneten Registrierungseinheit im Kommunikationsnetzwerk mindestens eine temporäre Kommunikationsadresse zusätzlich oder unabhängig zur fest zugewiesener Kommunikationsadresse des Kommunikationsgeräts generiert und ausgehandelt. Diese temporäre Kommunikationsadresse wird dann von der Registrierungseinheit registriert. Vorzugsweise wird sie mit der aktuellen Kontaktadresse des Kommunikationsgeräts für einen vorgebbaren Zeitraum assoziiert. Lediglich diese temporäre Kommunikationsadresse des Kommunikationsgeräts wird von der Registrierungseinheit einem anderen Kommunikationsgerät zum Bezug zugänglich gemacht.

Zweckmäßig kann es ggf. sein, dass von dem Kommunikationsgerät oder der netzseitigen Registrierungseinheit ein Bezugsrecht für die Abfrage oder für die Zustellung der jeweilig erzeugten, temporären Kommunikationsadresse durch oder an ein anderes Kommunikationsgerät vergeben wird.

Die Anwendung temporär vergebener Kommunikationsadressen kann insbesondere innerhalb von Kommunikationsdiensten wie z.B. einem PTT ("Push to talk")- Service zweckmäßig sein: Innerhalb eines ersten Kommunikationsdienstes wird die fest zugewiesene Kommunikationsadresse eines ersten Kommunikationsgeräts und dessen temporäre Kommunikationsadressen anderer Kommunikationsdienste von der Registrierungseinheit oder dem ersten Kommunikationsgerät ermittelt. Innerhalb des ersten Kommunikationsdienstes, welcher zweckmäßigerweise über einen Host/Server realisiert wird, wird zwischen den dort beteiligten Kommunikationsgeräten signalisiert, welches Kommunikationsgerät temporäre Kommunikationsadressen anderer Kommunikationsdienste des ersten Kommunikationsgeräts abfragen wird. Dabei können insbesondere Bezugsrechte zur Abfrage der temporären Kommunikationsadressen des ersten Kommunikationsgeräts von diesem oder der Registrierungseinheit vergeben und innerhalb des ersten Kommunikationsdienstes an die anderen, dort beteiligten Kommunikationsgeräte übermittelt werden. Eine oder mehrere temporäre Kommunikationsadressen werden vom ersten Kommunikationsgerät oder von der diesem zugeordneten Registrierungseinheit generiert und nur diese temporären Kommunikationsadressen werden für einen vorgebbaren Zeitraum innerhalb eines zweiten Kommunikationsdienstes verwendet.

Im Rahmen der Erfindung sind vorstehend folgende Akronyme und Definitionen verwendet worden, die insbesondere der technischen 3GPP-Fachterminologie entsprechen:
- 3GPP: Third Generation Partnership Project (dritte Generation Partnerschaftprojekt)
- AoR: Address of Record (Kommunikationsadresse)
- APN: Access Point Name (Zugangspunktname)
- AS: Application Server (Applikationsserver)
- CN: Core Network (Kernnetzwerk)
- DHCP: Dynamic Host Control Protocol (dynamisches Host Kontroll Protokoll)
- DRNC: Drift RNC (Drift Funknetzwerk-Kontrolleinheit)
- FQDN: Fully Qualified Domain Name (voll qualifizierter Domainname)
- GGSN: Gateway GPRS Support Node (Gateway GPRS Netzknoten)
- GMSC: Gateway MSC
- GSM: Global System for Mobile Communications (GSM Funkkommunikationssystem)
- HLR: Home Location Register (Heimatort-Register)
- HN: Home Network (Heimatnetzwerk)
- IETF: Internet Engineering Task Force
- IMS: IP Multimedia CN Subsystem (IP Multimedia Kernnetzwerk Subsystem)
- IMSI: International Mobile Subscriber Identity (Internationale Mobilteilnehmeridentität)
- IP: Internet Protocol (Internetprotokoll)
- ISIM: IMS SIM
- MGCF: Media Gateway Control Function (Media Gateway Kontrollfunktion)
- MSC: Mobile Switching Center (Mobile Vermittlungzentrale)
- OSI: Open Systems Interconnection
- P-CSCF: Proxy CSCF
- PUID: Public User Identity (öffentliche Nutzeridentität)
- RAB: Radio Access Bearer (Funkzugangsträger)
- RNC: Radio Network Controller (Funknetzwerk-Kontrolleinheit)
- S-CSCF: Serving CSCF (dienende CSCF)
- SDP: Session Description Protocol
- SGSN: Serving GPRS Support Node (dienender GPRS Netzknoten)
- SIP: Session Initiation Protocol (Sitzungsinitiierungsprotokoll)
- SIPS URI: Secure SIP URI (sichere SIP URI)
- UA: User Agent (Nutzeragent)
- UAC: User Agent Client (dienstanfordernder Nutzeragent)
- AUS: User Agent Server (dienstliefernder Nutzeragent)
- UE: User Equipment (Kommunikationsgerät)
- UMTS: Universal Mobile Telecommunication System
- URI: Uniform Resource Identifier (einheitliche Ressourcenkennung)
- UTRAN: Universal Terrestrial Radio Access Network (Teilnetzwerk in UMTS)
- VLR: Visitor Location Register (Besucherorts Register)
- VN: Visited Network (besuchtes Netzwerk)

## Patentansprüche

1. Verfahren zum Registrieren eines Kommunikationsgeräts (UE1) an einem Kommunikationsnetzwerk (CN), indem zwischen dem Kommunikationsgerät (UE1) und mindestens einer Registrierungseinheit (AV1) des Kommunikationsnetzwerks (CN) ein oder mehrere temporäre Kommunikationsadressen (NI1, NI2) ausgehandelt werden, die lediglich für eine vorgebbare Nutzungszeitdauer (ZT1, ZT2) gültig sind, und die jeweilige temporäre Kommunikationsadresse (NI2) von der Registrierungseinheit (AV1) für diese Nutzungszeitdauer (ZT2) registriert wird
wobei
von dem Kommunikationsgerät (UE1) ein oder mehrere temporäre Kommunikationsadressen (NI1, NI2) zur Registrierung durch die Registrierungseinheit (AV1) vorgeschlagen werden, und dass diese vorgeschlagenen Kommunikationsadressen (NI1, NI2) vom Kommunikationsgerät (UE1) mittels eines Registrierungssignals (S2*) an die Registrierungseinheit (AV1) übermittelt wird und
dass die jeweilig übermittelte, temporäre Kommunikationsadresse (NI2) lediglich dann von der Registrierungseinheit (AV1) registriert wird, wenn diese temporäre Kommunikationsadresse (NI2) für deren Nutzungszeitdauer (ZT2) noch frei vergebbar ist.

2. Verfahren nach Anspruch 1,
**dadurch gekennzeichnet,**
**dass** von dem Kommunikationsgerät (UE1) den vorgeschlagenen temporären Kommunikationsadressen (NI1, NI2) eine Priorität (PI1, PI2) zugeordnet wird, mit der die Reihenfolge deren Registrierung festgelegt wird, und dass diese zugeordnete Priorität (PI1, PI2) zusammen mit den vorgeschlagenen temporären Kommunikationsadressen (NI1, NI2) im Registrierungssignal (S2*) an die Registrierungseinheit (AV1) übertragen wird.

3. Verfahren nach einem der Ansprüche 1 mit 2,
**dadurch gekennzeichnet,**
**dass** von der Registrierungseinheit (AV1) für das Kommunikationsgerät (UE1) ein oder mehrere temporäre Kommunikationsadressen selbst generiert werden, wenn die vom Kommunikationsgerät (UE1) übermittelten temporären Kommunikationsadressen (NI1, NI2) schon vergeben sind.

4. Verfahren nach einem der vorhergehenden Ansprüche,
**dadurch gekennzeichnet,**
**dass** dem Funkkommunikationsgerät (UE1) von der Registrierungseinheit (AV1) mit Hilfe eines Bestätigungssignals (E2*) die erfolgreiche Registrierung der jeweiligen temporären Kommunikationsadresse (NI2) mitgeteilt wird.

5. Verfahren nach einem der vorhergehenden Ansprüche,
**dadurch gekennzeichnet,**
**dass** von dem ersten Funkkommunikationsgerät (UE1) oder der Registrierungseinheit (AV1) jeweils ein Bezugsrecht für die Abfrage der jeweilig erzeugten, temporären Kommunikationsadresse (NI1, NI2) durch ein anderes Funkkommunikationsgerät (UE2) vergeben wird.

6. Verfahren nach einem der vorhergehenden Ansprüche,
**dadurch gekennzeichnet,**
**dass** im Kommunikationsnetzwerk (CN) die jeweilig temporäre Kommunikationsadresse (NI2) mit der dynamischen Kontaktadresse (CO1) des Kommunikationsgeräts (UE1) assoziiert wird.

7. Verfahren nach Anspruch 6,
**dadurch gekennzeichnet,**
**dass** die dynamische Kontaktadresse (CO1) durch die dynamische IP-Adresse des sich registrierenden Kommunikationsgeräts (UE1) gebildet wird.

8. Verfahren nach einem der vorhergehenden Ansprüche,
**dadurch gekennzeichnet,**
**dass** als jeweilige temporäre Kommunikationsadresse (NI1, NI2) des Kommunikationsgeräts (UE1) eine PUID-Adresse, insbesondere eine SIP URI (Session Initiation Protocol Uniform Resource Identifier)- oder TEL URL (Telefon Uniform Resource Locator), generiert und verwendet wird.

9. Verfahren nach Anspruch 8,
**dadurch gekennzeichnet,**
**dass** die PUID-Adresse im TO-Headerfeld, in einem separaten Headerfeld, oder im Nachrichtenkörper einer SIP-Nachricht untergebracht wird.

10. Verfahren nach einem der vorhergehenden Ansprüche,
**dadurch gekennzeichnet,**
**dass** von dem Funkkommunikationsgerät (UE1) oder der Registrierungseinheit (AV1) jeweils ein Bezugsrecht für die Abfrage oder Zustellung der jeweilig erzeugten, temporären Kommunikationsadresse (NI1, NI2) innerhalb eines Kommunikationsdienstes vergeben wird.

11. Funkkommunikationsgerät (UE1) mit Mitteln zur Durchführung des Verfahrens nach einem der Ansprüche 1 mit 10.

12. Registrierungseinheit (AV1) mit Mitteln zur Durchführung des Verfahrens nach einem der Ansprüche 1 mit 10.

## Claims

1. Method for registering a communications device (UE1) in a communications network (CN), whereby between the communications device (UE1) and at least one registration unit (AV1) of the communication network (CN) one or more temporary communications addresses (NI1, NI2) are negotiated which are valid only for a predeterminable utilisation period (ZT1, ZT2), and the temporary communications address concerned (NI2) is registered by the registration unit (AV1) for said utilisation period (ZT2),
wherein
one or more temporary communications addresses (NI1, NI2) for registration by the registration unit (AV1) are proposed by the communications device (UE1) and these proposed communications addresses (NI1, NI2) are transmitted by the communications device (UE1) by means of a registration signal (S2*) to the registration unit (AV1), and
the temporary communications address (NI2) transmitted in each case is registered by the registration unit (AV1) only if said temporary communications address (NI2) is still freely allocatable for its utilisation period (ZT2).

2. Method according to claim 1,
**characterised in that**
a priority (PI1, PI2) is assigned by the communications device (UE1) to the proposed temporary communications addresses (NI1, NI2), which priority determines the sequence of their registration, and **in that** said assigned priority (PI1, PI2) is transferred together with the proposed temporary communications addresses (NI1, NI2) in the registration signal (S2*) to the registration unit (AV1).

3. Method according to one of claims 1 with 2,
**characterised in that**
one or more temporary communications addresses are generated by the registration unit (AV1) for the communications device (UE1), even if the temporary communications addresses (NI1, NI2) transmitted by the communications device (UE1) have already been allocated.

4. Method according to one of the preceding claims,
**characterised in that**
successful registration of the respective temporary communications address (NI2) is communicated to the radiocommunications device (UE1) by the registration unit (AV1) with the aid of a confirmation signal (E2*).

5. Method according to one of the preceding claims,
**characterised in that**
a reference right is allocated in each case by the first radiocommunications device (UE1) or the registration unit (AV1) for the interrogation of the temporary communications address (NI1, NI2), generated in each case, by another radiocommunications device (UE2).

6. Method according to one of the preceding claims,
**characterised in that**
in the communications network (CN) the temporary communications address (NI2) in each case is associated with the dynamic contact address (CO1) of the communications device (UE1).

7. Method according to claim 6,
**characterised in that**
the dynamic contact address (CO1) is formed by the dynamic IP address of the registering communications device (UE1).

8. Method according to one of the preceding claims,
**characterised in that**
a PUID address, in particular an SIP URI (session initiation protocol uniform resource identifier) or TEL URL (telephone uniform resource locator), is generated and used as the respective temporary communications address (NI1, NI2) of the communications device (UE1).

9. Method according to claim 8,
**characterised in that**
the PUID address is accommodated in the TO header field, in a separate header field, or in the body of an SIP message.

10. Method according to one of the preceding claims,
**characterised in that**
a reference right is allocated in each case by the radiocommunications device (UE1) or the registration unit (AV1) for interrogating or delivering the temporary communications address (NI1, NI2) generated in each case within a communications service.

11. Radiocommunications device (UE1) comprising means for implementing the method according to one of claims 1 with 10.

12. Registration unit (AV1) comprising means for implementing the method according to one of claims 1 with 10.

## Revendications

1. Procédé d'enregistrement d'un dispositif de communication (UE1) sur un réseau de communication (CN), dans lequel une ou plusieurs adresses de communication temporaires (NI1, NI2) sont négociées entre le dispositif de communication (UE1) et au moins une unité d'enregistrement (AV1) du réseau de communication (CN), lesquelles sont uniquement valables pour une durée d'utilisation prédéterminable (ZT1, ZT2), et dans lequel l'unité d'enregistrement (AV1) enregistre l'adresse de communication temporaire respective (NI2) pour cette durée d'utilisation (ZT2), dans lequel le dispositif de communication (UE1) propose une ou plusieurs adresses de communication temporaires (NI1, NI2) pour l'enregistrement par l'unité d'enregistrement (AV1), et en ce que le dispositif de communication (UE1) transmet à l'unité d'enregistrement (AV1) ces adresses de communication proposées (NI1, NI2) au moyen d'un signal d'enregistrement (S2*) et en ce que l'unité d'enregistrement (AV1) enregistre uniquement l'adresse de communication temporaire transmise respective (NI2) lorsque cette adresse de communication temporaire (NI2) est encore librement attribuable pour sa durée d'utilisation (ZT2).

2. Procédé selon la revendication 1, **caractérisé en ce que** le dispositif de communication (UE1) affecte aux adresses de communication temporaires proposées (NI1, NI2) une priorité (PI1, PI2) avec laquelle l'ordre de leur enregistrement est déterminé, et **en ce que** cette priorité affectée (PI1, PI2) est transmise avec les adresses de communication temporaires proposées (NI1, NI2) dans le signal d'enregistrement (S2*) à l'unité d'enregistrement (AV1).

3. Procédé selon l'une des revendications 1 et 2, **caractérisé en ce que** l'unité d'enregistrement (AV1) génère elle-même pour le dispositif de communication (UE1) une ou plusieurs adresses de communication temporaires lorsque les adresses de communication temporaires (NI1, NI2) transmises par le dispositif de communication (UE1) sont déjà attribuées.

4. Procédé selon l'une des revendications précédentes, **caractérisé en ce que** l'unité d'enregistrement (AV1) communique, à l'aide d'un signal de confirmation (E2*), au dispositif de radiocommunication (UE1) le bon enregistrement de l'adresse de communication temporaire (NI2).

5. Procédé selon l'une des revendications précédentes, **caractérisé en ce que** le premier dispositif de radiocommunication (UE1) ou l'unité d'enregistrement (AV1) attribue respectivement un droit d'option pour l'interrogation par un autre dispositif de radiocommunication (UE2) de l'adresse de communication temporaire (NI1, NI2) respectivement générée.

6. Procédé selon l'une des revendications précédentes, **caractérisé en ce que** dans le réseau de communication (CN), l'adresse de communication temporaire respective (NI2) est associée à l'adresse de contact dynamique (CO1) du dispositif de communication (UE1).

7. Procédé selon la revendication 6, **caractérisé en ce que** l'adresse de contact dynamique (CO1) est constituée par l'adresse IP dynamique du dispositif de communication (UE1) qui s'enregistre.

8. Procédé selon l'une des revendications précédentes, **caractérisé en ce qu'**une adresse PUID, en particulier une SIP URI (Session Initiation Protocol Uniform Resource Identifier) ou TEL URL (Telefon Uniform Resource Locator) est générée et utilisée comme adresse de communication temporaire respective (NI1, NI2) du dispositif de communication (UE1).

9. Procédé selon la revendication 8, **caractérisé en ce que** l'adresse PUID est logée dans la zone d'en-tête TO, dans une zone d'en-tête distincte ou dans le corps de message d'un message SIP.

10. Procédé selon l'une des revendications précédentes, **caractérisé en ce que** le dispositif de radiocommunication (UE1) ou l'unité d'enregistrement (AV1) attribue respectivement un droit d'option pour l'interrogation ou l'affectation de l'adresse de communication temporaire (NI1, NI2) respectivement générée au sein d'un service de communication.

11. Dispositif de radiocommunication (UE1) doté de moyens pour la réalisation du procédé selon l'une des revendications 1 à 10.

12. Unité d'enregistrement (AV1) dotée de moyens pour la réalisation du procédé selon l'une des revendications 1 à 10.
